## Europäisches Patentamt

## European Patent Office

## Office européen des brevets

(11) Publication number: **0 194 812**
**B1**

(12) **EUROPEAN PATENT SPECIFICATION**

(45) Date of publication of patent specification: 03.10.90

(51) Int. Cl.⁵: **B 01 J 19/18,** C 11 D 11/04,
C 11 D 13/04

(21) Application number: 86301603.6

(22) Date of filing: 06.03.86

(54) Chemical reactions and apparatus.

(30) Priority: 08.03.85 GB 8506025

(43) Date of publication of application:
17.09.86 Bulletin 86/38

(45) Publication of the grant of the patent:
03.10.90 Bulletin 90/40

(84) Designated Contracting States:
AT BE CH DE FR GB IT LI NL SE

(56) References cited:
EP-A-0 048 590
EP-A-0 163 865
AT-A- 372 298
FR-A- 925 563

The file contains technical information
submitted after the application was filed and
not included in this specification

(73) Proprietor: **UNILEVER PLC**
**Unilever House Blackfriars P.O. Box 68**
**London EC4P 4BQ (GB)**
(84) **GB**

(73) Proprietor: **UNILEVER NV**
**Burgemeester s'Jacobplein 1 P.O. Box 760**
**NL-3000 DK Rotterdam (NL)**
(84) **BE CH DE FR IT LI NL SE AT**

(72) Inventor: **Edwards, Richard Barrie**
**Treeview Cedar Way Gayton**
**Wirral Merseyside (GB)**
Inventor: **Irving, Graeme Neil**
**14 Kirket Close Bebington**
**Wirral Merseyside (GB)**

(74) Representative: **Thomas, Susan Margaret et al**
**UNILEVER PLC Patents Division P.O. Box 68**
**Unilever House**
**London EC4P 4BQ (GB)**

## Description

### Field of invention

This invention relates generally to the performance of chemical reactions in devices generating a shear field.

Such a process is disclosed in FR—A—925,563.

### General description

Chemical reactions are usually required to be performed in conditions controlled as to a number of parameters, for example temperature, pressure, mass, momentum and energy transfer. The provision of a continuous chemical reactor capable of efficiently satisfying all requirements is frequently difficult, in particular when continuous operation of the reaction is desired.

The present invention provides a process for carrying out a chemical reaction including a step wherein at least two reactants are supplied to apparatus in which the material supplied is subjected to substantially even shear by passing the material repeatedly at an angle through a shear zone formed within the bulk of the material by relative movement of surfaces between which the material passes, the shear zone being formed within the material by temporarily entraining material in cavities in the surfaces so that a velocity component of the material is altered by relative movement of the surfaces during entrainment. The cavities in which the material is entrained are discrete close-ended cavities in the surfaces, and are bounded by a periphery on the surface. The material subjected to shear will of course include reaction products as well as starting material.

The original reactants (i.e. starting materials for the reaction) may be mixed together before entry to the apparatus. Indeed the reaction may be more than half completed. The process of this invention may then serve to drive the reactant further towards completion.

There is no restriction in the reaction system to which the present process is directed. Thus liquid/liquid, solid/liquid, gas/solid, solid/solid and gas/liquid reactions are included.

The reaction process of this invention may be utilised for reaction of numerous chemical species. The advantageous properties of the apparatus enable it to be used in difficult circumstances where the material is viscous, so that the flow regime is predominantly laminar. The apparatus applies even shear to substantially all the material. The apparatus is particularly suitable for reactions where the product tends to encapsulate starting material: passage through the shear zone breaks up the encapsulated particles.

Many reactions require heating or cooling. Apparatus used in this invention can provide excellent temperature control. An apparatus part which defines one of the said surfaces can be contacted with a heating or cooling medium. Possibly the apparatus parts defining both surfaces can be heated or cooled in this way.

These advantageous properties of the apparatus can make it particularly suitable for some reactions. Howsever, the apparatus has an additional advantage which is that it requires only a modest capital outlay in proportion to the throughput achievable. It may therefore be desirable to use the apparatus even for reactions which can be carried out in a technically satisfactory manner with more conventional equipment.

The reactions carried out by the process of this invention will be reactions of monomeric reactants (or other non-polymeric reactants such as dimers) and may lead to a plurality of products, one of which may be an unwanted byproduct, such as water or carbon dioxide. The reactants may in particular be reactions arising in the production of detergents and in particular anionic detergents, either soap or non-soap detergents. The reaction carried out by the process may then have a detergent active as product. Alternatively the product may be a precursor of a detergent active, so that the product of the reaction requires additional processing steps to provide the desired detergent active. Thus a detergent sulphonic or hydrogen sulphate or sulphuric acid ester can be formed by the procedure of the present invention and subsequently subjected to a neutralisation step. The neutralisation step may form the process of the invention with the formation of the detergent active acid precursor being prepared in a separate previous step. Anionic detergent actives contain a hydrophobic negative charged ionic species and examples are water soluble salts of long chain (C8 to C22) monocarboxylic acids, water soluble salts of organic sulphonic acids, e.g. alkane (C8 to C20) sulphates, alkyl (C4 to C16) aryl sulphonates and alkane (C8 to C20) sulphonates, and water soluble salts of organic sulphonic acids, e.g. alcohol (C8 to C20) sulphates which may be primary or secondary.

The process of the invention is of value for sulphonation and neutralisation procedures necessary for the manufacture of anionic detergent materials. Examples of such procedures are the sulphonation of alkylates, e.g. alkyl benzenes and long chain alcohols and fats/oils with oleum and sulphonation of alpha olefins with concentrated sulphuric acid. These reactions are characterised by requiring short reaction times, initially heterogeneous liquid-liquid reactants, high viscosity changes during reaction and exothermic chemistry. Neutralisation using sodium, potassium and ammonium hydroxides and amines can be performed on the acidic species of the anionic detergent actives.

The direct reaction of long chain acids with a neutralising agent for example alkali metal hydroxide, bicarbonate or carbonate to form soap can be performed within the present procedure. This reaction is disclosed in UK 1074093 (Unilever Limited).

Another specific possibility within the present invention is saponification reactions in which fats and oils are reacted with a suitable agent, usually sodium hydroxide solution, to form a soap containing medium.

Apparatus suitable for use in this invention may be called a cavity transfer mixer (CTM). In one form of such apparatus, the relatively movable confronting surfaces are closely spaced, and each has a pattern of cavities which overlap cavities of the other surface so that material moved between the surfaces traces a path through cavities alternatively in each surface whereby the bulk of the reactants passes through the shear zone generated by displacement of the surfaces. In preferred apparatus for this process of this invention the cavities are arranged to give constantly available but changing pathways through the apparatus during mutual movement of the two surfaces.

A preferred geometry for such apparatus is cylindrical and, as mentioned above, it is preferred to have thermal control means, for example cooling/heating jackets, in contact with the part of the apparatus which forms at least one surface, possibly the parts which provide both surfaces. Apparatus having a cylindrical geometry may comprise a stator within which is journalled a rotor; the opposing faces of the stator and rotor carry the cavities through which the material passes during its passage through the device.

Apparatus used in this invention may also have a planar geometry in which opposed plane surfaces having patterns of cavities would be moved mutually, for example by rotation of one plane, so that material introduced between the surfaces at the point of rotation would move outwards and travel alternately between cavities on each surface.

Another form of cylindrical geometry maintains the inner cylinder stationary while rotating the outer cylinder. The central stator is more easily cooled, or heated if required, because the fluid connections can be made in a simple manner; the external rotor can also be cooled or heated in a simple manner. It is also mechanically simpler to apply rotational energy to the external body rather than the internal cylinder. Thus this configuration has advantages in construction and use.

The mixer will in general not have any ability to propel the material through itself. Accordingly, material is generally forced through the mixer using auxiliary equipment (such as a conveying screw) as the rotor is turned. It is advantageous if the speed of the auxiliary equipment can be controlled separately from that of the mixer so that the throughput can be varied separately from the work performed on the material in the mixer thus enhancing control of the processing. The separate operation may be achieved by arranging the auxiliary equipment to provide material for processing at an angle to the centre line of the shear-producing mixer. This arrangement allows rotational energy to be supplied to the mixer or along its own centre line. An in-line arrangement is more easily achieved when the external member of the mixer is the rotor, because rotational drive to the rotor can be from one side.

In general a variety of cavity shapes can be used, for example Metal Box (UK 930 339) disclose longitudinal slots in the two surfaces.

Drawings

The invention will be explained further and exemplified with reference to the accompanying diagrammatic drawings in which:

Figure 1 is a longitudinal section of a cavity transfer mixer with cylindrical geometry;

Figure 2 is a transverse section along the line II—II on Figure 1;

Figure 3 is a diagrammatic developed view of an area of the confronting surfaces of the rotor and stator, which illustrates the pattern of cavities in the device of Figure 1;

Figures 4, 5 and 6 similarly illustrate other possible patterns of cavities;

Figure 7 is a longitudinal section of a cavity transfer mixer in which the external cylinder forms the rotor;

Figure 8 is a diagrammatic view of the mixer of Figure 7 with auxiliary equipment.

Specific description of apparatus

Embodiments of mixer devices will now be described.

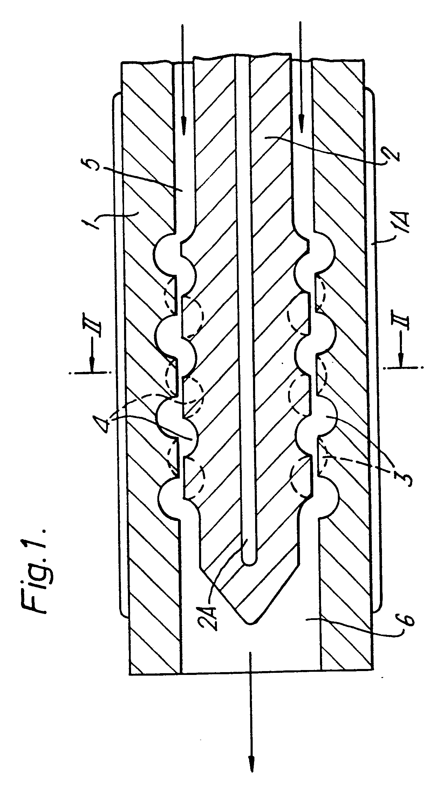

A cavity transfer mixer is shown in Figure 1 in longitudinal section. This comprises a hollow cylindrical stator member 1, a cylindrical rotor member 2 journalled for rotation within the stator with a sliding fit, the facing cylindrical surfaces of the rotor and stator carrying respective pluralities of parallel, circumferentially extending rows of cavities which are disposed with:

a) the cavities in adjacent rows on the stator circumferentially offset;

b) the cavities in adjacent rows on the rotor circumferentially offset; and

c) the rows of cavities on the stator and rotor axially offset.

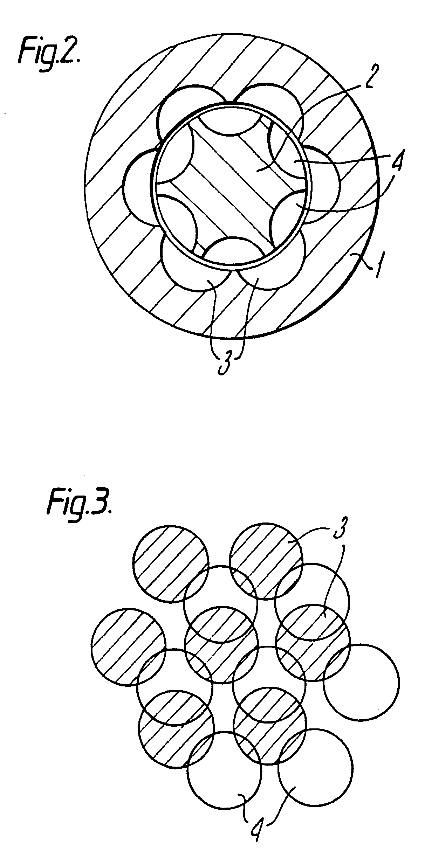

The pattern of cavities 3 carried on the stator 3 and cavities 4 in the rotor are illustrated in Figure 3. The cavities 3 on the stator are shown hatched. The overlap between patterns of cavities 3, 4 is also shown in Figure 2. A liquid jacket 1A is provided for the application of temperature control to the stator 1 by the passage of heating or cooling water. A temperature control conduit 2A is provided in the rotor 2.

The material passing through the device moves through the cavities alternately on the opposing faces of the stator and rotor. The cavities immediately behind those shown in section are indicated by dotted profiles on Figure 1 to allow the repeating pattern to be seen.

The material flow is frequently divided between pairs of adjacent cavities on the same rotor or stator face because of the overlapping position of the cavity on the opposite stator or rotor face.

The material is entrained for a short period in each cavity through which it passes during passage through the mixer and thus one of its velocity components is altered. A shear zone is generated by the mutual displacement of the stator and rotor surfaces. The whole or bulk of the material flow is subjected to considerable working during its passage through the shear zone.

An embodiment of mixer according to Figures 1 to 3 had a rotor radius of 2.54 cm with 36 hemispherical cavities (radius 0.9 cm) arranged in six rows of six cavities. The internal surface of the stator carried seven rows of six cavities to provide cavity overlap at the entry and exit. The material to be worked was injected into the device through channel 5, which communicates with the narrow annular space between the rotor and stator. The material was injected by means of a screw extruder. The material left the device through nozzle 6.

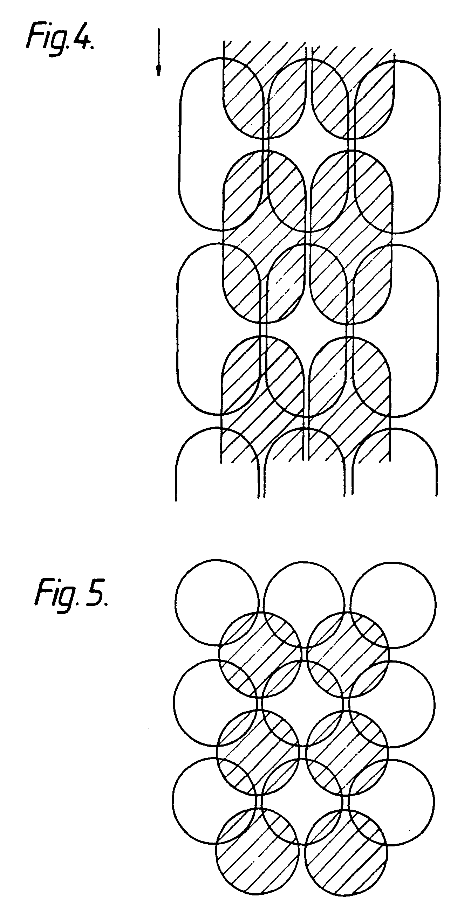

Figure 4 shows another possible arrangement of cavities, namely elongate cavities arranged in a square pattern; these cavities have the sectional profile of Figure 2. These cavities are aligned with their longitudinal axis parallel to the longitudinal axis of the device and the direction of movement of material through the device; the latter is indicated by the arrow. As in Figure 3, the cavities on the stator are shown hatched.

Figure 5 shows another possible pattern of cavities having the dimensions and profile of those shown in Figures 1, 2 and 3. The cavities of Figure 5 are arranged in a square adjacent cavities on the same surface. This pattern does not provide as high a degree of overlap as given by the pattern of Figure 3. The latter has each cavity close to six cavities on the same surface, i.e. a hexagonal pattern.

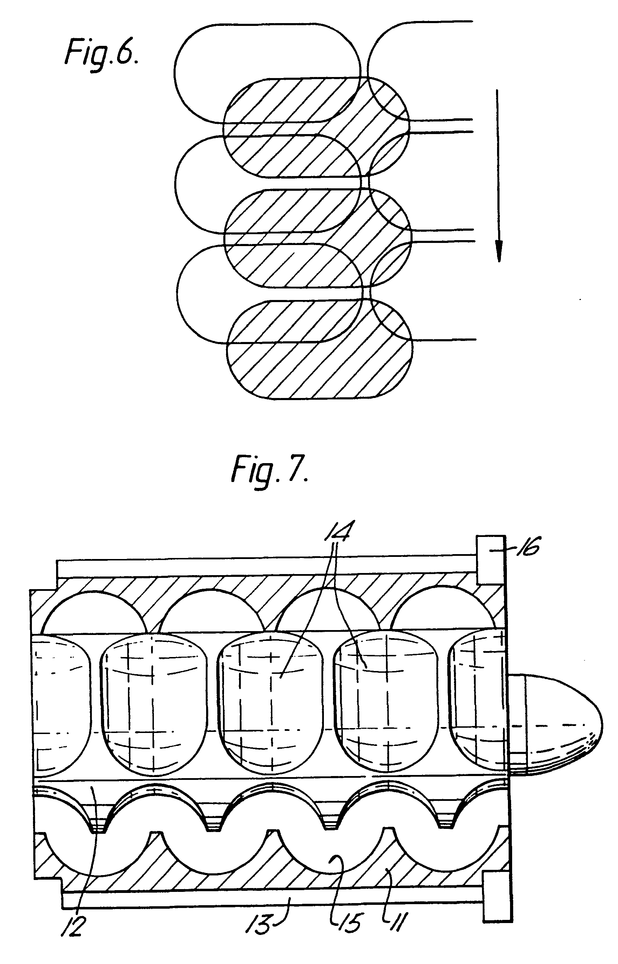

Figure 6 shows a pattern of cavities wherein the cavities on the rotor, shown hatched, and stator have a larger dimension normal to the material flow; the latter is indicated by an arrow. The cavities are thus elongate. This embodiment provides a lower pressure drop over its length compared with devices of similar geometry but not having cavities positioned with a longer dimension normal, i.e. perpendicular to the material flow. This way to obtain a reduction in pressure drop requires at least one of the surfaces to carry elongate cavities having their longer dimension normal to the material flow.

The cavity transfer mixer of Figure 7 had the external cylinder 11 journalled for rotation about central shaft 12. Temperature control jacket 13 and an internal conduit within the central shaft 12 were present but the latter is not shown because the cavities on the central shaft are shown in plan view while the rotor is sectioned. The central stator (diameter 52 mm) had three rows 14 of three cavities with partial, i.e. half cavities at the entry and exit points. On the rotor there were four rows 15 of three cavities. The cavities on the stator and rotor were elongate with a total arc dimension of 5.1 cm normal to the material flow with hemispherical section ends of 1.2 cm radius joined by a semicircular sectioned panel of the same radius. The cavities were arranged in the pattern of Figure 6, i.e. with their longest dimension normal to material flow. The rotor was driven by a chain drive to external toothed wheel 16.

It will be seen from the previous description that embodiments of the apparatus suitable for use in the present invention have cavities in the surfaces which are discrete and close-ended in that they are bounded by a periphery lying completely on the surface.

Apparatus of this class is beneficial in allowing temperature control of the reactants as they pass through the apparatus.

The throughput of reactants may be maintained separate from the generation of shear because there may be separate drive means for the mixer device and for auxiliary equipment passing the reactants through the mixer. Thus the momentum transfer and energy transfer characteristics may be retained separate.

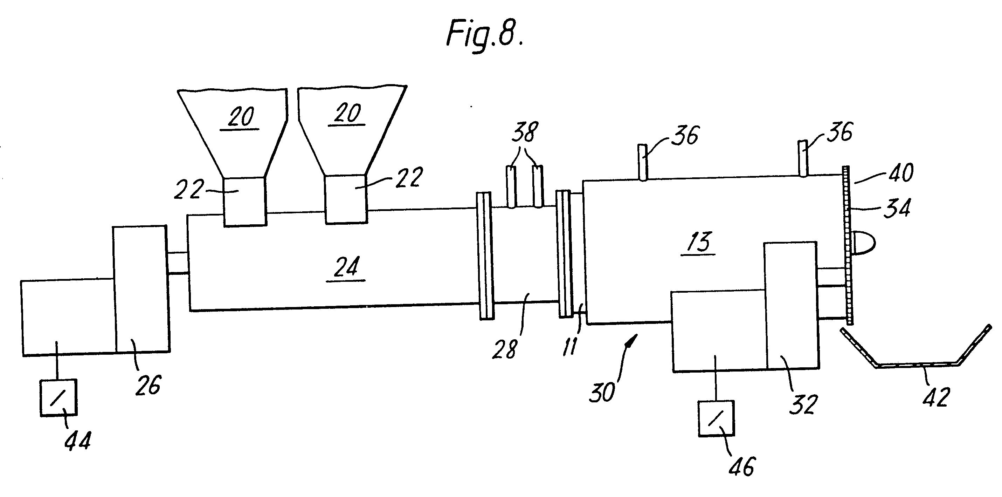

Figure 8 diagrammatically shows a complete in-line arrangement utilising the cavity transfer mixer similar to that of Figure 7 but with greater length. Reactants are supplied into feed hoppers 20 and then delivered by metering feeders 22 into a single screw extruder 24 driven by a motor and gearbox 26. This extruder delivers through a short intermediate section 28 into the cavity transfer mixer 30 of Figure 7 whose rotor 11 is driven by a second motor and gearbox 32 through a drive chain 34 running onto the toothed wheel 16. The temperature control jacket 13 around the rotor 11 has inlet and outlet connections 36. Inlet and outlet connections 38 to the temperature control conduit within the central stator are led out through the intermediate section 28.

The materials are thus first mixed together in the extruder 24 and reaction commences there. The partly reacted mixture then passes into the cavity transfer mixer 30 where it is subjected to even shear and the reaction is taken further towards completion. The material which has been passed through the mixer is delivered at its end 40 from which it is collected in any convenient fashion, e.g. by allowing it to fall into a conveyor trough 42.

It will be appreciated that the throughput of reactants is governed by the speed of the extruder 24 and/or the metering feeders 22 admitting material to this extruder. The transfer of energy into the material through shearing in the cavity transfer mixer 30 is governed by the speed of rotation of rotor 11. The extruder 24 and the rotor 11 are driven by different motors 26, 32 with separate speed controllers 44, 46 electrically connected to them. Accordingly they can be controlled to run at different speeds and thus the momentum transfer and energy transfer can be retained separate.

A cavity transfer mixer such as any described above is of particular value when an enclosed reaction zone is required. However, for reactions which generate a gaseous product it is necessary to vent the enclosed material to allow escape of the gas.

For a reaction using a gaseous starting material, an inlet for the admission of gas is provided either in the auxiliary device which feeds the cavity transfer mixer, or at the inlet to the cavity transfer mixer. Thus for example if the apparatus of Figure 8 was used to carry out a reaction beween a liquid or solid and a gaseous reactant, one of the supply hoppers 20 and metering feeders 22 would be omitted. The gaseous reactant could for example be admitted part way along the screw extruder or admitted to the intermediate section 28 close to the inlet of mixer 30.

Specific description

Examples of the process of the invention will now be given by way of illustration.

Example I

A mixture of distilled fatty acids derived from hardened tallow and coconut oil were mixed in a weight ratio of 60:40 together with anhydrous sodium carbonate and water in a crutcher vessel for 10 minutes. The mixing was peformed at 26°C to 29°C with the reactants in proportions giving fully neutralised soap containing 12.4% water. Analysis showed 64% of the original distilled fatty acid had been neutralised at this stage.

A cavity transfer mixer having a diameter of 0.052 metre and length 0.112 metre was attached to the exit of a standard 0.15 metre soap plodder. The cavity transfer mixer was steam jacketed to allow the fluid passing through the device to be raised to 80°C. The cavities on the internal stator and external rotor had a spherical section and were arranged as shown in Figure 3; ten cavities were arranged circumferentially and eight cavities axially. The external rotor was rotated at 235 revolutions per minute. The partially neutralised mixture was passed through the plodder/mixer assembly three times; the level of neutralisation after each pass was 73%, 75% and 78% in succession.

In this reaction one of the starting materials (sodium carbonate) is solid. The distilled fatty acid is a solid which melts under the reaction conditions and water is also present. The product is a soft solid soap and thus the mixture passing through the cavity transfer mixture was very viscous. This reaction is a difficult one to carry out in that the soap product tends to encapsulate articles of the fatty acid, preventing them from further reaction. As can bs seen from this Example the cavity transfer mixture provides an efficient route for carrying out neutralisation processes.

Example II

The mixture of powders, sulphonic acid and water in the following amounts of % by weight were used in this example:—

| | |
|---|---|
| alkyl benzene sulphonic acid | 26.6 |
| water | 4.54 |
| tetrasodium pyrophosphate | 13.65 |
| soda ash | 16.49 |
| calcite | 29.69 |
| bentonite | 2.92 |
| sodium sulphate | 3.63 |
| SCMC | 1.95 |

The mixture was pumped via a screw arrangement through a cavity transfer mixer which provided a cylindrical shear zone of length 0.084 metre and diameter 0.052 metre at a rate of 0.65/0.75 kg min$^{-1}$. No attempt was made to control the temperature of the process fluid which left the CTM at about 100°C. The cavities on both the rotating and static elements were arranged in 3 axial rows of circumferential slots numbering 3 per row. Relative displacement of the rotating and static elements of the CTM was achieved by rotating the inner elements at 60 rpm.

The mixture extruded from the CTM was examined using a small angle X-ray technique to determine the degree of chemical reaction between the sulphonic acid and soda ash. It was found that the sulphonic acid was fully neutralised.

In this reaction, the alkylbenzene sulphonic acid was a liquid starting material while the soda ash was solid as were the filler materials which were also present. The mixture concerned is a mixture intended for use in a non-soap detergent bar for washing laundry. Such a composition is particularly difficult to mix but the example demonstrates that the process of the invention leads to complete reaction even under these conditions of difficult mixing.

Example III

Neat alkyl benzene sulphonic acid and aqueous sodium hydroxide were supplied to a cavity transfer mixer in stoichiometric quantities to give a fully neutralised sodium alkyl benzene sulphonate paste. The sodium hydroxide concentration was calculated to give a 50% by weight paste.

The cavity transfer mixer used had a length of 0.22 metre and diameter 0.8 metre. The pattern of cavities was as shown schematically in Figure 3, with 7 circumferential rows of cavities on the rotor and 6 circumferential rows on the stator, the material entering and leaving via rows of half cavities on the rotor. The rotor was turned at a rate of 75 rpm.

The reactants were fed to an intermediate section (like part 28 in Figure 8) just upstream of the mixer by metering pumps. The product was formed at a rate of 40 Kg. hour$^{-1}$.

The product left the CTM at about 60°C. Complete neutralisation of the acid was confirmed, using universal indicator. The product formed by this process can be used as a feedstock for detergent products.

The process of this Example requires two viscous fluids to be reacted to produce a paste. Moreover, the solubility of one of the reactants (ABS acid) and of the product in water is limited. This Example, therefore, demonstrates a cavity transfer mixer providing an efficient method of carrying out a reaction in a multiphase system.

## Claims

1. A process for effecting chemical reaction of at least two reactants, characterised by supplying the reactants to apparatus having confronting surfaces with discrete close-ended cavities formed therein, moving the surfaces relatively one past the other, and passing the supplied material through the apparatus between the surfaces, and subjecting the material to substantially even shear during passage through the apparatus by passing the material repeatedly at an angle through a shear zone formed within the bulk of the material by the relative movement of the surfaces between which the material passes, the shear zone being formed in the material by temporarily entraining material in the close-ended cavities so that a velocity component of the material is altered by the relative movement of the surfaces during entrainment; wherein the chemical reactants are non-polymeric in nature.

2. A process according to Claim 1 wherein the apparatus comprises an inner cylindrical member and an outer member surrounding it and coaxial therewith, the said surfaces being the exterior of the inner member, and the interior of the surrounding outer member.

3. A process according to any one of the preceding claims wherein an apparatus part which provides a said surface is contacted by a medium to regulate the temperature thereof.

4. A process according to any one of the preceding claims wherein at least one reactant is supplied to the apparatus by auxiliary equipment, and the speed of relative movement of the said surfaces is controllable independently of the rate of supply by said auxiliary equipment.

5. A process according to any one of the preceding claims wherein the product of reaction is a detergent active, or a precursor thereof.

6. A process according to Claim 5 wherein the detergent active is anionic.

7. A process according to Claim 6 wherein the reaction is neutralisation of an acid to give an anionic detergent active.

8. A process according to Claim 7 carried out in the presence of builder and filler.

9. A process according to any one of the preceding claims wherein at least one reactant is liquid or a solid which melts within the apparatus, and the product is a soft solid, or a paste.

## Patentansprüche

1. Verfahren zur Durchführung einer chemischen Reaktion von wenigstens zwei Reaktanten, gekennzeichnet durch Zuführen der Reaktanten zur einer Vorrichtung, die gegenüberliegende Flächen mit diskreten geschlossen-eindigen Aushöhlungen, die darin gebildet werden, aufweist, Bewegen der Flächen gegeneinander eine hinter der anderen und Durchleiten des zugeführten Materials durch die Vorrichtung zwischen den Flächen und Unterwerfen des Materials unter eine im wesentlichen gleichmäßige Scherung während des Durchgangs durch die Vorrichtung durch wiederholtes Durchführen des Materials in einem Winkel durch eine Scherzone, die innerhalb der Materialmenge durch Gegeneinander-Bewegen der Flächen zwischen denen sich das Material bewegt, gebildet wird, wobei die Scherzone in dem Material durch temporäres Mitreißen von Material in die geschlossen-endigen Aushöhlungen gebildet wird, derart daß eine Geschwindigkeitskomponente des Materials durch die Gegeneinander-Bewegung der Flächen während des Mitreißens verändert wird; worin die chemischen Reaktanten nicht-polymerer-Natur sind.

2. Verfahren nach Anspruch 1, worin die Vorrichtung ein inneres zylindrisches Teil und ein äußeres Teil, das dieses umschließt und koaxial zu diesem ist, umfaßt, wobei diese Flächen die Außenwände des inneren Teils und die Innenwände des umschließenden äußeren Teils sind.

3. Verfahren nach einem der vorhergehenden Ansprüche, worin ein Vorrichtungsteil, das eine solche Fläche liefert, durch ein Medium berührt wird, um die Temperatur davon zu regulieren.

4. Verfahren nach einem der vorhergehenden Ansprüche, worin wenigstens ein Reaktant der Vorrichtung durch eine Hilfsvorrichtung zugeführt wird und die Geschwindigkeit der Gegeneinander-Bewegung der Flächen unabhängig von der Zuführgeschwindigkeit durch die Hilfsvorrichtung kontrolliert werden kann.

5. Verfahren nach einem der vorhergehenden Ansprüche, worin das Reaktionsprodukt ein waschaktives Mittel oder ein Vorläufer davon ist.

6. Verfahren nach Anspruch 5, worin das waschaktive Mittel anionisch ist.

7. Verfahren nach Anspruch 6, worin die Reaktion eine Neutralisation einer Säure ist, um ein anionisches waschaktives Mittel zu ergeben.

8. Verfahren nach Anspruch 7, das in Anwesenheit von Gerüststoff und Füllmaterial durchgeführt wird.

9. Verfahren nach einem der vorhergehenden Ansprüche, worin wenigstens ein Reaktant flüssig oder ein Feststoff ist, der in der Vorrichtung schmilzt und das Produkt ein weicher Feststoff oder eine Paste ist.

## Revendications

1. Procédé de réaction chimique d'au moins deux réactifs, caractérisé en ce qu'on fournit les réactifs à un appareil présentant des surfaces en regard comportant des cavités séparées à extrémités fermées; on déplace les surfaces relativement l'une en regard de l'autre; on fait passer la matière fournie à travers l'appareil entre les surfaces; et on soumet cette matière à un cisaillement sensiblement régulier pendant son passage à travers l'appareil en faisant passer la matière de façon réitérée et suivant un angle d'inclinaison à travers une zone de cisaillement formée dans la masse de la matière par le mouvement relatif des surfaces entre lesquelles la matière passe, la zone de cisaillement étant formée dans la matière par un entraînement provisoire de la matière dans les . .

cavités à extrémités fermées de sorte que la composante de vitesse de la matière est modifiée par le mouvement relatif des surfaces en cours d'entraînement; procédé dans lequel les réactifs chimiques ne sont pas de nature polymère.

2. Procédé selon la revendication 1, dans lequel l'appareil comprend un organe cylindrique intérieur et un organe extérieur entourant celui-ci et coaxial avec lui, lesdites surfaces étant l'extérieur de l'organe intérieur et l'intérieur de l'organe extérieur qui l'entoure.

3. Procédé selon l'une quelconque des revendications précédentes, dans lequel la partie de l'appareil qui définit ladite surface est mise en contact avec un milieu pour en régler la température.

4. Procédé selon l'une quelconque des revendications précédentes, dans lequel au moins un réactif est fourni à l'appareil par un équipement auxiliaire, et la vitesse du mouvement relatif desdites surfaces est réglable indépendamment du débit d'alimentation par ledit équipement auxiliaire.

5. Procédé selon l'une quelconque des revendications précédentes, dans lequel le produit de réaction est un détergent actif ou un précurseur de celui-ci.

6. Procédé selon la revendication 5, dans lequel le détergent actif est anionique.

7. Procédé selon la revendication 6, dans lequel la réaction est une neutralisation d'un acide pour donner un détergent anionique actif.

8. Procédé selon la revendication 7, qu'on effectue en présence d'un adjuvant et d'une charge.

9. Procédé selon l'une quelconque des revendications précédentes, dans lequel au moins un réactif est un liquide ou un solide qui fond dans l'appareil, et le produit est une solide mou ou une pâte.

Fig.1.

Fig.2.

Fig.3.

*Fig.4.*

*Fig.5.*

Fig.6.

Fig. 7.

Fig.8.